# EUROPÄISCHE PATENTSCHRIFT

(11) **EP 1 754 746 B1**
(45) Veröffentlichungstag und Bekanntmachung des Hinweises auf die Patenterteilung: **12.03.2008**
(21) Anmeldenummer: 06117914.9
(22) Anmeldetag: 26.07.2006
(51) Int. Cl.: C08J 9/36

(54) **Schaumstoffplatte mit Beschichtung zur Haftung von Mörtel-, Beton- und Putzsystemen**
Foamed panel with coating for adhesion on mortar, concrete or plaster
Panneau en mousse avec revêtement pour adhesion sur mortier, beton ou plâtre

(30) Priorität: 17.08.2005 DE 102005039160
(43) Veröffentlichungstag der Anmeldung: 21.02.2007
(73) Patentinhaber: BASF SE, 67056 Ludwigshafen (DE)
(72) Erfinder: Alteheld, Armin, 55543, Bad Kreuznach (DE); Ehrenstein, Moritz, 67063, Ludwigshafen (DE); Hahn, Klaus, 67281, Kirchheim (DE); Turznik, Gerhard, 67269, Grünstadt (DE)

(56) Entgegenhaltungen:
- GB-A- 1 033 237
- GB-A- 2 000 490
- JP-A- 9 226 081

## Beschreibung

Die Erfindung betrifft Schaumstoffplatten mit einer Beschichtung auf mindestens einer Plattenoberfläche wobei die Beschichtung 1 bis 50 Gew.-% eines Füllstoffes mit einer Partikelgröße von mindestens 50 µm enthält, sowie ein Verfahren zur deren Herstellung durch Auftragen und Abtrocknen einer Füllstoffhaltigen Polymerdispersion.

In der Regel haben Schaumstoffplatten, insbesondere Platten mit Schäumhaut, keinen ausreichenden Haftverbund mit mineralischen Baustoffen. Aus diesem Grund werden beispielsweise extrudierte Polystyrol-Hartschaumstoffe (XPS) nachträglich mit z. B. einem Waffelmuster geprägt. Diese Nachbearbeitung ist jedoch aufwendig und führt zu zusätzlichen Kosten. Die Platten sind auch nicht im Sichtbereich einsetzbar und eigenen sich somit nur für den Vorputz.

Die EP-A 1 566 400 beschreibt Schaumstoffplatten mit einer Beschichtung zur Haftung von Mörtel- Beton- und Putzsystemen. Die Beschichtung besteht aus einem Polymerfilm, der eine Glasübergangstemperatur im Bereich von -60 bis + 40°C aufweist.

Aufgabe der vorliegenden Erfindung war es, den genannten Nachteilen abzuhelfen und eine Schaumstoffplatte sowie eine einfaches und kostengünstiges Verfahren zu deren Herstellung bereitzustellen, die ohne Prägung eine verbesserte Haftung zu Mörtel-, Beton- und Putzsystemen aufweist.

Demgemäss wurde eine Schaumstoffplatte mit einer Beschichtung auf mindestens einer Plattenoberfläche gefunden, wobei die Beschichtung 1 bis 50 Gew.-% eines Füllstoffes mit einer Partikelgröße von mindestens 50 µm enthält.

Bevorzugt liegt der Anteil der Füllstoffe mit einer Partikelgröße von mindestens 50 µm, bevorzugt im Bereich von 100 µm bis 2000 µm, bei 5 bis 20 Gew.-%, Bezogen auf die Beschichtung. Damit der Gesamtanteil der Füllstoffe in der Beschichtung nicht zu hoch ist, werden zur Herstellung der Beschichtung Füllstoffe eingesetzt, bei denen mindestens 95%, bevorzugt mindestens 99% eine Teilchengröße im Bereich von 10 µm bis 1000 µm, bevorzugt im Bereich von 50 µm bis 500 µm aufweisen. Bei faserförmigen Füllstoffen bezieht sich die Partikelgröße auf die längste Ausdehnung.

Als Füllstoffe kommen alle organischen oder anorganischen Feststoffe in Betracht, die die entsprechende Teilchengröße aufweisen oder durch Vermahlung mit entsprechender Teilchengröße erhältlich sind.

Bevorzugte Füllstoffe sind anorganische Feststoffe, wie Aluminiumsilikate, Quarz, gefällte oder pyrogene Kieselsäure, Leicht- und Schwerspat, Talkum, Dolomit oder Calciumcarbonat, Borate, partikelförmige Mörtelbestandteile, Farbpigmente, wie Titanweiß, Bleiweiß, Zinkweiß, Lithophone und Antimonweiß, Eisenoxidschwarz, Manganschwarz, Cobaltschwarz, Antimonschwarz, Chromgelb, Mennige, Zinkgelb, Zinkgrün, Pinkrot, Cadmiumrot, Cobaltblau, Berliner Blau, Ultramarin, Manganviolett, Cadmiumgelb, Molybdatorange oder Strontiumgelb, natürliche oder synthetische Fasern, wie Glas- oder Kohlenfasern, Holzmehl oder Polymerpartikel, beispielsweise aus thermoplastischen Polymeren, wie Polystyrol oder Polypropylen oder Duromeren, wie Epoxid- oder Melamin/Formaldehyd-Harzen.

Besonders bevorzugt wird ein Füllstoff verwendet, der aus dem gleichen Material wie die Schaumstoffplatte besteht. Auf diese Weise werden die Eigenschaften, z. B Brandverhalten und die chemische Zusammensetzung der beschichteten Schaumstoffplatte nicht wesentlich beeinflusst. Vorteilhaft kann auch Recyclat aus dem Herstellverfahren der Schaumstoffplatte als Füllstoff eingesetzt werden. So werden beispielsweise in einer Beschichtung einer Polystyrol-Extrusionsschaumplatte bevorzugt Polymerpartikel aus Polystyrol eingesetzt.

In der Regel besteht die Beschichtung aus einem Polymerfilm, der eine oder mehrere Glasübergangstemperaturen im Bereich von -60 bis + 100 °C aufweist und in dem die Füllstoffe eingebettet sind. Bevorzugt liegen die Glasübergangstemperaturen des Polymerfilmes im Bereich von -30 bis +60°C, besonders bevorzugt im Bereich von -10° bis + 20°C. Die Glasübergangstemperatur kann mittels Differential Scanning Calorimetrie (DSC) bestimmt werden.

Die Haftzugfestigkeit zwischen einem Unterputz oder Beton und der mit der Beschichtung versehenen Plattenoberfläche der Schaumstoffplatte beträgt in der Regel mindesten 50 kPa, bevorzugt mindestens 100 kPa, besonders bevorzugt mindestens 200 kPa, gemessen nach DIN EN 1607 an Proben nach DIN EN13494.

Als Schaumstoffplatte können Partikelschaumstoffe oder Extrusionsschaumstoffe verwendet werden. Partikelschaumstoffe sind durch Versintern von Schaumpartikeln, beispielsweise aus expandiertem Polyolefinen, wie expandierbarem Polypropylen (EPP) oder vorgeschäumtem Partikeln aus expandierbarem Polystyrol (EPS) erhältlich. Bevorzugt verwendet man Schaumstoffplatten, die eine geschlossene Schäumhaut aufweisen, z.B. einen Extrusionsschaumstoff auf Basis eines Styrolpolymeren (XPS).

Die Schaumstoffplatten haben in der Regel eine Dichte im Bereich von 10 bis 100 g/l und sind geschlossenzellig, d.h. sie weisen bevorzugt Zellen auf, die zu mindestens 90%, insbesondere zu 95 bis 100% geschlossenzellig sind. Für eine weitere Verbesserung der Haftung zu Mörtel-, Beton- und Putzsystemen können sie nach der Herstellung und vor der Beschichtung z.B. mit einem Waffelmuster geprägt und gestanzt werden.

Die Schaumstoffplatten weisen in der Regel eine Dicke im Bereich von 5 bis 500 mm, bevorzugt 10 bis 400 mm, besonders bevorzugt 15 bis 350 mm auf. Insbesondere für die Wärmedämmung in Bauanwendungen werden quaderförmige Schaumstoffplatten mit einem Querschnitt von mindestens 50 cm² eingesetzt.

Vorteilhaft können auch Schaumstoffplatten mit einer Wärmeleitfähigkeit von 0,035 W/mK (gemessen nach DIN 52612 bei 10°C) oder darunter eingesetzt werden. Diese können 0,01 bis 10 Gew.-%, bezogen auf das Polymer, eines partikelförmigen IR-Absorbers, wie Ruß, Metallpulver, z. B. Aluminiumpulver und Titandioxid, bevorzugt Graphit mit einer mittleren Partikelgröße von 1 bis 100 µm enthalten.

Besonders bevorzugt werden unter Verwendung halogenfreier Treibmittel hergestellte, gleichmäßige, geschlossenzellige und formstabile extrudierte Polystyrolschaumstoffkörper (XPS) aus einer Polystyrol-Thermoplastikmatrix mit einem mittleren Molekulargewicht M_{w} zwischen 175 000 und 500 000 g/mol und einer Uneinheitlichkeit M_{w}/Mₙ von größer als 1,5, wie sie in der EP-A-0 802 220 beschrieben sind. Sie weisen in der Regel eine Druckfestigkeit, gemessen nach DIN EN 826 im Bereich von 0,2 bis 1,0 N/mm², bevorzugt im Bereich von 0,3 bis 0,7 N/mm² auf. Bevorzugt liegt die Dichte im Bereich von 25 bis 50 g/l und die Dicke im Bereich von 20 bis 200 mm. Der Querschnitt beträgt in der Regel mindestens 50 cm², bevorzugt 100 bis 2000 cm².

Der die Beschichtung bildende Polymerfilm enthält in der Regel ein amorphes oder teilkristallines, thermoplastisches Polymer. Bevorzugt werden Styrol enthaltende Polymere mit einem Styrolgehalt im Bereich von 10 bis 90 Gew.-%. Besonders bevorzugt werden Styrol-Acrylate und Styrol-Butadien-Copolymere als filmbildende Polymere für die Beschichtung eingesetzt.

In der Regel sind Schichtdicken im Bereich von 1 µm bis 1000 µm, insbesondere 5 µm bis 100 µm für die erfindungsgemäße Funktion der Beschichtung ausreichend.

Die Beschichtung der Schaumstoffplatte kann beispielsweise durch Auftragen einer Polymerlösung oder Polymerdispersion auf eine oder mehrere Plattenoberflächen und anschließendes Abtrocknen erfolgen. Bevorzugt wird die Schaumstoffplatte beidseitig, also auf den beiden gegenüberliegenden großflächigen Plattenoberflächen beschichtet. Hierbei können die Beschichtungen auch verschiedene Schichtdicken und/oder Zusammensetzungen aufweisen.

Als Verfahren zum Auftragen der Polymerlösung oder Polymerdispersion eigen sich Sprühen, Streichen, Tauchen oder Bedrucken. Der Auftrag kann flächendeckend oder in Mustern, z. B. durch Flexodruck erfolgen. Die aufzutragenden Menge richtet sich nach der Art des Polymerfilmes, des aufgetragenen Musters und dem Haftgrund. Bei Verwendung von Polymerdispersionen ist in der Regel eine Auftragsmenge von 1 bis 50 g/m², bevorzugt von 3 bis 30 g/m², besonders bevorzugt von 5 bis 20 g/m² für eine zufriedenstellende Haftung ausreichend.

Geeignete Polymerdispersionen zur Beschichtung sind solche, die üblicherweise zur Modifizierung mineralischer Baustoffe oder als Fliesenkleber eingesetzt werden. Sie können durch Emulsionspolymerisation von ethylenisch ungesättigten Monomeren, wie Styrol, Butadien oder Acrylaten erhalten werden. Bevorzugt werden Styrol-Acrylat-Dispersionen und Styrol-Butadien-Dispersionen verwendet.

Die Styrol-Butadien-Dispersionen haben vorzugsweise eine Monomerzusammensetzung von ca. 70 Gew.-% Styrol und ca. 30 Gew-% Butadien und könne gegebenenfalls noch gering Mengen, z. B. 1 bis 5 Gew.%, bezogen auf alle Monomeren, Acrylsäure, Methacrylsäure, Acrylamid oder Methacrylamid enthalten. Geeignete Dispersionen sind beispielsweise in der EP-A 754657 beschrieben.

Bevorzugt sind Ammoniakfreie Polymerdispersionen, die ein Copolymerisat enthalten, das als Monomere 55 - 80 Gew.-% wenigstens eines Esters der Acrylsäure mit C2-C12-Alkanolen, wie Ethylarcylat, n-Butylacrylat oder 2-Ethylhexylacrylat, 12 - 35 Gew.-% wenigstens eines vinylaromatischen Monomers, wie Styrol und/oder wenigstens eines Esters der Methacrylsäure mit C₁-C₄-Alkanolen, wie Methylacrylat, 3-12 Gew.-% wenigstens eines Monoesters eines C₂-C₆-Alkandiols, wie 2-Hydroxyethylacrylat und 0,1 bis 1 Gew.% wenigstens einer ethylenisch ungesättigen Carbonsäure, wie Acrylsäure oder Methacrylsäure einpolymerisiert enthalten. Die Copolymerisate können gegebenenfalls noch geringe Mengen Monomere mit Harnstoff- oder Thioharnstoffgruppen, wie Ureidoethyenmethacrylat oder hydrolysierbaren Siliziumgruppen, wie 3-Methacryloxypropyltrimethyoxysilan enthalten. Geeignete Polymerdispersionen und deren Herstellungsverfahren sind z. B in EP-A 1180530, EP 1182179 beschrieben.

Die erfindungsgemäßen Füllstoffe können den Polymerdispersionen vor dem Auftragen zugegeben werden. Desweiteren können Flammschutzmittel, wie halogenfreie oder halogenhaltige Verbindungen, beispielsweise Melamin, Aluminiumoxidhydrate, Ammoniumpolyphosphate, Arylphosphate oder bromierte Verbindungen wie HBCD oder Infrarot (IR)- absorbierende Feststoffe, wie Graphit, Ruß oder Aluminium zugegeben werden. Auf diese Weise lassen sich die physikalischen und dekorativen Eigenschaften der Schaumstoffplatten beeinflussen.

Es ist auch möglich, die erfindungsgemäßen Füllstoffe nach dem Auftragen der Polymerdispersion auf die noch nicht getrocknete Oberfläche zu verteilen oder eine Polymerdispersion zu verwenden, aus der die erfindungsgemäßen Füllstoffe durch Kristallisation oder Fällung während der Filmbildung gebildet werden.

Die erfindungsgemäßen Füllstoffe bewirken aufgrund der Teilchengröße eine Strukturierung und Erhöhung der Rauhigkeit der Oberfläche der Beschichtung. Dadurch wird die Haftung des Mörtels weiter verbessert. Eine weitere Verbesserung der Haftung kann durch Aufbringen von Vliesen, Langfasern oder Geweben, beispielsweise einer Stoffgewebeschicht erreicht werden.

Nach dem Abtrocknen können die beschichteten Platten zur Lagerung ohne signifikantes Verkleben untereinander gestapelt werden. Bevorzugt werden die Schaumstoffplatten als Wärmedämmstoff für das Bauwesen eingesetzt.

### Beispiele:

Für die Beispiele wurde eine extrudierte Polystyrol-Hartschaumstoffplatte (XPS), Styrodur 3035 CS mit einer Dichte von 33 kg/m3 und den Maßen 1250mm*600mm*50 mm verwendet.

Nach dem Abtrocknen der Polymerdispersion wurden die beschichteten Platten mit einem etwa 3,5 mm starken Unterputz (Ardurit ® X7G der Firma Ardex, Witten) versehen und an einer Betonwand befestigt. Nach fünf Tagen wurde die Haftung bewertet.

### Vergleichsversuch

Auf die XPS-Platte wurde beidseitig mit einer Farbrolle 8 g/m² einer Styrol-Acrylatdispersion D1 nach EP-A 1 108 530 aufgetragen (Schichtdicke der Acrylat-Beschichtung ca 8 µm). Die beschichtete XPS-Platte konnte mit großem körperlichen Kraftaufwand von der Betonwand entfernt werden. Die Trennung erfolgte zwischen Beschichtung und Mörtel.

### Beispiel 1

Die Styrol-Acrylat-Dispersion D1 nach EP-A 1 108 530 wurde mit 10 Gew.-%, bezogen auf den Feststoffgehalt, Polystyrolpulver (Partikelanalyse mittels Malvern Mastersizer S: 99% mit Teilchendurchmesser zwischen 10 µm und 1000 µm) vermischt und beidseitig mit einer Farbrolle 8 g/m2 auf die XPS-Platte aufgetragen. Die beschichtete XPS-Platte konnte von Hand nicht mehr von der Betonwand entfernt werden

## Patentansprüche

1. Schaumstoffplatte mit einer Beschichtung auf mindestens einer Plattenoberfläche, **dadurch gekennzeichnet, dass** die Beschichtung eine Schichtdicke im Bereich von 1 bis 1000 µm aufweist und 1 bis 20 Gew.-% eines Füllstoffes mit einer Partikelgröße von mindestens 50 µm enthält.

2. Schaumstoffplatte nach Anspruch 1, **dadurch gekennzeichnet, dass** sie als Füllstoff Polymerpartikel, Fasern, Holzmehl oder anorganische Feststoffe enthalten.

3. Schaumstoffplatte nach Anspruch 1 oder 2, **dadurch gekennzeichnet, dass** die Beschichtung einen Polymerfilm, der eine oder mehrere Glasübergangstemperaturen im Bereich von -60 bis +100°C aufweist, enthält.

4. Schaumstoffplatte nach einem der Ansprüche 1 bis 3, **dadurch gekennzeichnet, dass** die Haftzugfestigkeit zwischen einem Unterputz und der mit der Beschichtung versehenen Plattenoberfläche mindesten 50 kPa, gemessen nach DIN EN 1607 an Proben nach DIN EN13494, beträgt.

5. Schaumstoffplatte nach einem der Ansprüche 1 bis 4, **dadurch gekennzeichnet, dass** sie aus einem Extrusionsschaum auf Basis eines Styrolpolymeren (XPS) besteht.

6. Schaumstoffplatte nach einem der Ansprüche 1 bis 4, **dadurch gekennzeichnet, dass** sie aus einem Partikelschaum aus Polystyrol oder Polyolefin besteht.

7. Verfahren zur Herstellung einer Schaumstoffplatte gemäß einem der Ansprüche 1 bis 6, **dadurch gekennzeichnet, dass** man eine Polymerdispersion mit 1 bis 20 Gew.-%, bezogen auf den Feststoffgehalt der Polymerdispersion, eines Füllstoffes mit einer Partikelgröße von mindestens 50 µm versetzt, auf die Schaumstoffplatte mit 1 bis 50 g/m² aufträgt und abtrocknen lässt.

8. Verwendung der Schaumstoffplatten nach einem der Ansprüche 1 bis 6 als Wärmedämmstoff für das Bauwesen.

## Claims

1. A foam sheet with a coating on at least one surface of the sheet, wherein the coating has a layer thickness in the range from 1 to 1000 µm and comprises from 1 to 20% by weight of a filler whose particle size is at least 50 *µ*m.

2. The foam sheet according to claim 1, which comprises, as filler, polymer particles, fibers, wood flour, or inorganic solids.

3. The foam sheet according to claim 1 or 2, wherein the coating comprises a polymer film which has one or more glass transition temperatures in the range from -60 to +100°C.

4. The foam sheet according to any of claims 1 to 3, wherein the tensile bond strength between an undercoat of render and the sheet surface provided with the coating is at least 50 kPa, measured to DIN EN 1607 on specimens to DIN EN13494.

5. The foam sheet according to any of claims 1 to 4, which is composed of an extruded foam based on a styrene polymer (XPS).

6. The foam sheet according to any of claims 1 to 4, which is composed of a molded foam composed of polystyrene or of polyolefin.

7. A process for production of a foam sheet according to any of claims 1 to 6, which comprises applying, to the foam sheet, from 1 to 50 g/m² of a polymer dispersion with which from 1 to 20% by weight, based on the solids content of the polymer dispersion, of a filler whose particle size is at least 50 µm has been admixed, and drying the polymer dispersion.

8. The use of the foam sheet according to any of claims 1 to 6 as thermal insulation material for the construction industry.

## Revendications

1. Plaque de mousse munie d'un revêtement sur au moins une surface de la plaque, **caractérisée en ce que** le revêtement présente une épaisseur de couche de l'ordre de 1 à 1000 µm et contient de 1 à 20 % en poids d'une matière de remplissage d'une taille de particules d'au moins 50 µm.

2. Plaque de mousse suivant la revendication 1, **caractérisée en ce qu'**elle contient en tant que matière de remplissage des particules de polymère, des fibres, des fibres de bois ou des solides inorganiques.

3. Plaque de mousse suivant la revendication 1 ou 2, **caractérisée en ce que** le revêtement contient un film polymère présentant une ou plusieurs températures de transition vitreuse de l'ordre de -60 à +100°C.

4. Plaque de mousse suivant l'une quelconque des revendications 1 à 3, **caractérisée en ce que** la résistance d'adhérence entre un fond d'enduit et la surface des plaques munie du revêtement est d'au moins 50 kPa, mesurée selon DIN EN 1607 sur des éprouvettes selon DIN EN 13494.

5. Plaque de mousse suivant l'une quelconque des revendications 1 à 4, **caractérisée en ce qu'**elle consiste en une mousse extrudée à base d'un polymère de styrène (XPS).

6. Plaque de mousse suivant l'une quelconque des revendications 1 à 4, **caractérisée en ce qu'**elle consiste en une mousse particulaire de polystyrène ou de polyoléfine.

7. Procédé de préparation d'une plaque de mousse suivant l'une quelconque des revendications 1 à 6, **caractérisé en ce que** l'on mélange une dispersion de polymère à 1 à 20 % en poids, par rapport à la teneur en solides de la dispersion de polymère, d'une matière de remplissage d'une taille de particules d'au moins 50 µm, on applique sur la plaque de mousse à raison de 1 à 50 g/m² et on laisse sécher.

8. Utilisation des plaques de mousse suivant l'une quelconque des revendications 1 à 6 en tant qu'isolant thermique pour le bâtiment.
